# EUROPEAN PATENT SPECIFICATION

(11) **EP 2 696 105 B1**
(45) Date of publication and mention of the grant of the patent: **20.06.2018**
(21) Application number: 13179373.9
(22) Date of filing: 06.08.2013
(51) Int. Cl.: F16H 7/18, F02B 67/06

(54) **Guide Device, Engine & Engine Assembly Method**
Führungsvorrichtung, Motor und Verfahren zur Montage eines Motors
Dispositif de guidage, procédé de montage de moteur et moteur

(30) Priority: 08.08.2012 GB 201214147
(43) Date of publication of application: 12.02.2014
(73) Proprietor: Nissan Motor Manufacturing (UK) Ltd., Cranfield Bedfordshire MK43 0DB (GB)
(72) Inventor: Lopez Ortiz, José Luis, Barcelona 08040 (ES); Lopez Ortiz, Andres, Barcelona 08040 (ES)

(56) References cited:
- GB-A- 2 424 936
- US-A1- 2002 107 096

## Description

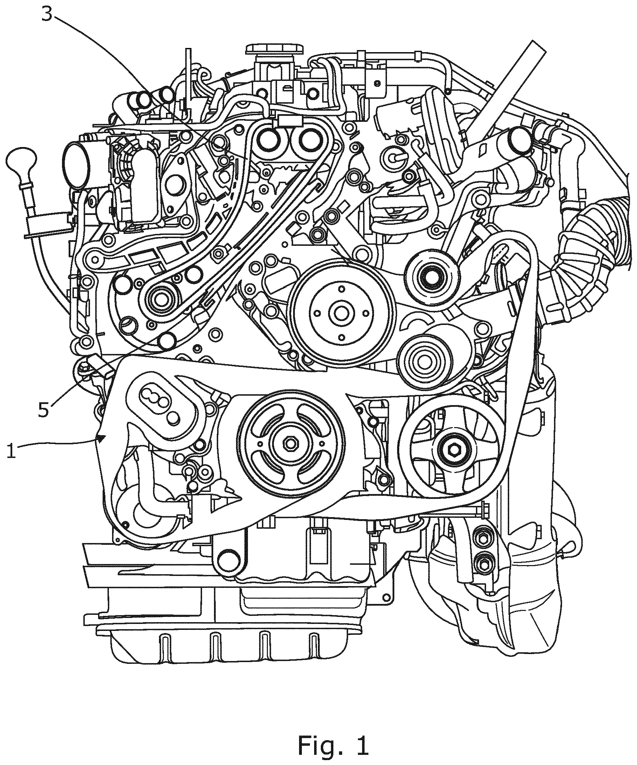

The present invention relates to an engine, and to an engine assembly method. GB2424936 is considered as the closest prior art for claims 1 and 8. Some internal combustion engines use a chain to drive one or more camshafts. The chain connects the engine crankshaft to the camshaft(s), which indirectly actuate, and control the timing of, the intake and exhaust valves. A front elevation of an engine 1 that uses a timing chain 3 is shown in **Figure 1****.**

Such an engine 1 typically includes a guide member 5 for guiding movement of the chain 3; particularly for limiting oscillations on at least one long chain run between sprockets. The guide member 5 is provided to reduce vibration and noise of chain 3 during operation of the engine 1. The guide 5 also prevents the chain 3 from interfering with other engine components in the vicinity of the chain.

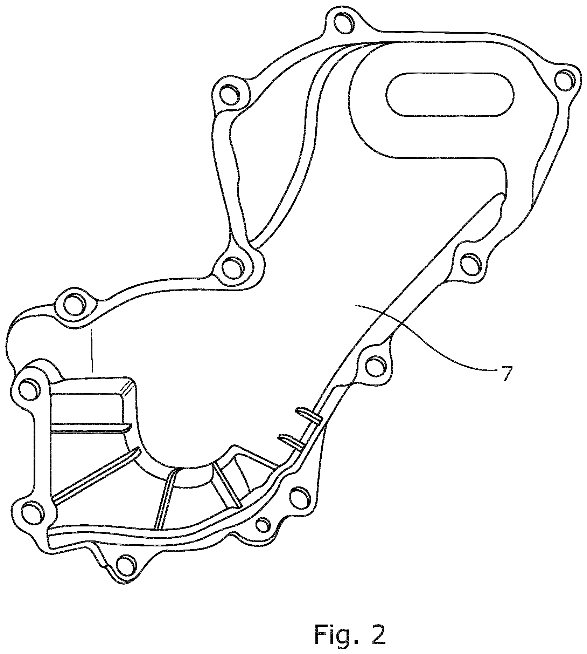

A cover 7 (shown on a larger scale in **Figure 2**) is applied to the engine 1 to protect the engine components, including the chain 3, and to prevent contaminants from entering the engine. A Formed In Place Gasket (FIPG) is used to seal the cover 7 to the engine 1, and the boundary is also sealed with a moulded rubber gasket.

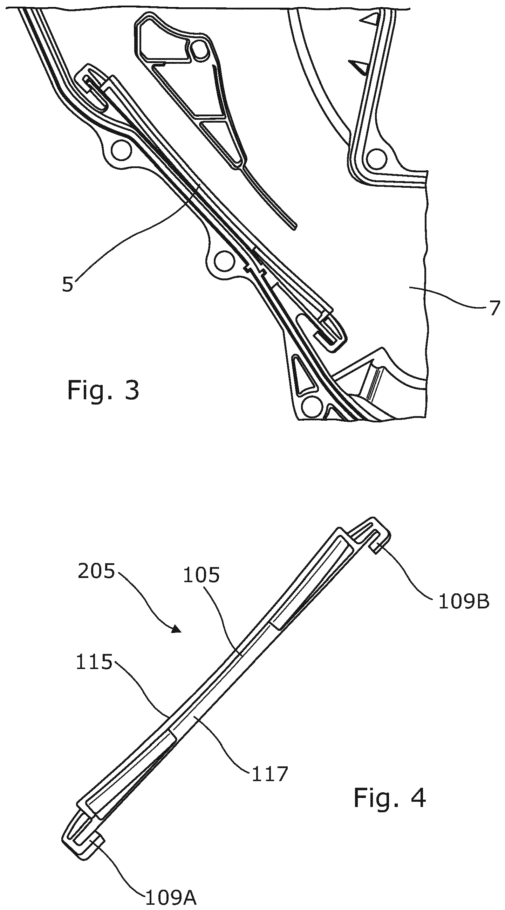

During assembly of the engine 1, the chain guide member 5 is inserted into the interior (engine facing side) of the cover 7 (see **Figure 3**), and the cover 7 and chain guide 5 are attached to the engine 1 simultaneously. The chain guide 5 is inserted into the cover in a manner that allows some play between the cover 7 and the chain guide 5, there is therefore a relatively loose fit between these components. Hence, there is little retention between the chain guide 5 and cover 7.

Typically, the orientation of the engine 1 on its assembly line is with the timing end, shown in Figure 1, pointing upwards. Hence, cover 7 is fitted with the interior side of the cover facing downwards. Therefore, there is a risk of the chain guide 5 falling from the cover 7. To avoid this happening, an assembly worker manually holds the chain guide 5 within the cover 7. This makes assembly awkward, and can lead to oil leaks; as there is an increased risk of the FIPG being removed in some areas, and the moulded gasket being moved from its correct position. Also, there is a risk of the chain guide 5 falling out of the cover 7; and the cover 7 being fitted to the engine 1 without the guide 5. The assembly worker may not notice that the guide 5 has fallen out of the cover 7, due to background noises and distractions. This can lead to a requirement for remedial work at a later stage.

The present invention seeks to mitigate at least one of the above-mentioned problems, or to at least provide an alternative engine, and engine assembly method.

According to one aspect of the invention, there is provided an engine according to claim 1. The engine includes a closed looped flexible coupling, an engine cover and a guide body for guiding movement of the closed looped flexible coupling, wherein at least one of the guide body and the engine cover includes at least one retainer formation arranged to hold the guide body to the engine cover during an engine assembly process, and wherein the or each retainer formation is separable from the guide body and/or engine cover respectively; characterized in that the or each retainer formation is arranged to separate from one of the guide body and the engine cover as a result of the engine being operated.

The invention enables the guide device to be retained within an engine cover during an engine assembly process, without the assembly worker having to manually hold it in place. Thus when the engine cover is oriented such that gravity acts on the guide device to detach it from the cover, the retainer formation provides sufficient resistive force to prevent this from happening. The resistive force is provided, for example, by friction between the retainer formation and the engine cover. It also enables the guide body to function properly within the completed engine, since the retainer formation detaches from the guide body after the guide body has been mounted to the engine.

The arrangement whereby the or each retainer formation is arranged to separate from the guide body as a result of the engine being operated is particularly useful since, typically, the engine cover together with at least one gasket provides a seal for that part of the engine; which prevents access to the retainer formation when it is mounted on the engine. Hence, the invention provides a means of separating the retainer formation from the guide body, when ordinarily it is inaccessible by the worker.

Advantageously, the or each retainer formation can be a separate component from the guide body and engine cover. Advantageously, the or each retainer formation is releasably attachable to at least one of the guide body and engine cover. This enables the formation to be reliably positioned with respect to the component on which it is mounted. The formation is detachable from the guide body and /or engine cover.

It has been found by the inventors that this approach provides the best balance between: providing a retaining function; and the ease with which the retainer formation can be detached from the guide device in the context of an assembled engine. That is, while an integrated formation can theoretically be used, there are problems with ensuring that the formation detaches or wears away when the engine is operated.

Advantageously, the or each retainer formation is attached to the guide body using an adhesive. The adhesive used to apply the retainer formation to the guide body is selected such that at least one engine operating condition can reduce the adhesion between the retainer formation and the guide body. For example, the engine operating temperature can soften the adhesive; thereby reducing adhesion. Relative movement between the guide body and the engine cover, which is caused by the flexible closed looped coupling rubbing against the guide body, causes the retainer formation to detach from the guide body and to fall into an engine cavity. The retainer formation is arranged so that it does not interfere with the operation of the engine when it detaches from the guide body.

The inventors have found that the best type of adhesive to use in this context is a pressure sensitive adhesive, and particularly an acrylic adhesive.

Advantageously, the retainer formation can be resilient. This enables the retainer formation to be squashed into a small gap between the guide body and a side wall of the engine cover. The resiliency also provides a suitable gripping force to retain the guide body within the cover. In preferred embodiments, the retainer formation includes an elastomer, and preferably a plasticizer-free elastomer.

Advantageously, the retainer formation has a Shore A hardness of less than or equal to 85; preferably less than or equal to 80; and more preferably still, less than or equal to 75. This enables the material to be sufficiently deformed to fit into the gap between the guide body and the side wall of the cover.

The retainer formation typically comprises a protrusion, and may be arranged to include at least one of a substantially hemispherical portion; a cylindrical portion; and a cuboid portion. The formation could also be tapered, squared, or hexagonal.

The guide body is elongate. The guide body can include a first mounting part for engaging with a first mounting formation. Advantageously, the first mounting formation can comprise a first boss; and the first mounting part can comprise a first hook-like formation. The guide body can include a second mounting part for engaging the first mounting formation, or a second mounting formation. Advantageously, the second mounting part can comprise a second hook-like formation. The second mounting formation can comprise a second boss. The first, and where applicable, the second mounting formation can be included in the engine cover.

Each of the first and second mounting parts are arranged to loosely engage their respective mounting formation(s). This enables the guide body to move relative to the engine cover by a small amount when located in-situ; and hence to move relative to the flexible closed looped coupling.

Advantageously, the or each retainer formation can be attached to at least one of the guide body and engine cover using an adhesive.

Advantageously, the adhesive is a pressure sensitive adhesive; and preferably an acrylic adhesive.

Advantageously, at least one of the retainer formation, guide body and engine cover can be resilient; or can include a resilient part.

Advantageously, the retainer formation can include or be made of an elastomer; and preferably a plasticizer-free elastomer.

Advantageously, the retainer formation can have a Shore hardness of less than 85; preferably less than 80; and more preferably still, less than or equal to 75.

Advantageously, the retainer formation can comprise a protrusion. The retainer formation can include at least one of a substantially hemispherical portion; a cylindrical portion; and a cuboid portion.

According to another aspect of the invention, there is provided an assembly method for assembling an engine according to claim 8. The method includes: providing a partly assembled engine including a closed looped flexible coupling, an engine cover and a guide body for guiding movement of the closed looped flexible coupling; providing at least one retainer formation arranged to hold the guide body to the engine cover; mounting the guide body in the engine cover; using the or each retainer formation to retain the guide body within the engine cover as the engine cover is moved into a mounting position on the engine; mounting the cover on the engine; and subsequently separating the or each retainer formation from at least one of the guide body and the engine cover.

Advantageously, the or each retainer formation can be separated after the engine cover is fully attached to the engine; for example, after the engine cover is sealed to the engine.

Advantageously, the or each formation can be releasably attachable to at least one of the guide body and the engine cover; and separating the or each retainer formation can include detaching the or each retainer formation from the guide body and/or engine cover.

Advantageously, separating the or each retainer formation can be achieved by operating the engine. For example, the retainer formation can be attached to at least one of the guide body and the engine cover using an adhesive; and the engine operating temperature reduces the adhesive bond between the retainer formation and the guide body or engine cover. This can detach the or each formation from the guide body or engine cover; or can sufficiently reduce the strength of the bond such that relative movement between the guide body and the cover can detach the or each formation.

Advantageously, separating the or each retainer formation can be achieved by moving the guide body relative to the engine cover, for example without substantial assistance from the engine operating temperature, such as at engine start-up.

Advantageously, the or each removed retainer formation remains within the engine. For example, when detached from the guide body / engine cover, the or each retainer formation can fall into a cavity within the engine.

Advantageously, the engine cover can be oriented such that the engine facing side of the engine cover is oriented substantially downwards when mounting the engine cover to the engine.

An embodiment of the invention will now be described, by way of example only, with reference to the drawings, in which:
Figure 1 is a frontal view of an engine, including a timing chain and a chain guide;
Figure 2 is a plan view (on a larger scale than Figure 1) of an engine cover for covering part of the engine in the vicinity of the chain shown in Figure 1;
Figure 3 is an underside view of the chain guide of Figures 1 and 4, located in-situ within the interior of the engine cover of Figure 2;
Figure 4 is an isometric view of the chain guide according to the invention;
Figure 5 is an enlarged isometric view of a temporary retainer formation that is removably attachable to the chain guide of Figure 4;
Figure 6 is an isometric view of part of the chain guide of Figure 4 having the temporary formation of Figure 5 attached thereto; and
Figure 7 is a side view of the chain guide of Figure 4, having the temporary retainer formation of Figure 5 mounted thereon, located in-situ within the interior of an engine cover.

**Figures 4 to 7** show a guide device for an engine according to the current invention. The guide device 205 includes a guide 105 for a closed looped flexible coupling, such as a chain 3 for engine 1, and preferably a timing chain 3 that connects a camshaft to a crankshaft; and a retainer formation 106 (not visible in Figure 4) that is releasably attachable to the guide 105.

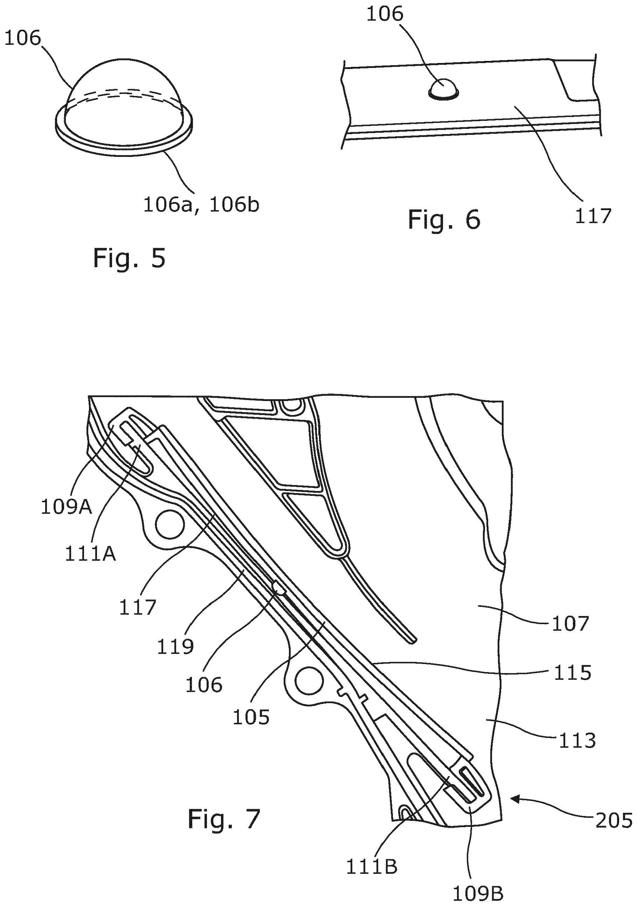

The guide 105 is arranged to fit inside an engine cover (107, Fig.7), which is mounted on the engine 1 during an assembly process. The guide 105 is elongate and includes first and second ends. At each of the first and second ends there is provided a hooked part 109A, 109B that is arranged to engage with a mounting formation 111A, 111B on an interior (engine facing) surface 113 of the engine cover. The arrangement of the hooked parts 109A, 109B and the mounting formations 111A, 111B is such that the guide 105 is loosely fitted to the engine cover 107, so that there is some play between the cover 107 and guide 105. This enables there to be some limited relative movement between the guide 105 and cover 107. The play between the cover and the guide enables the guide to properly guide the chain 3, and hence to reduce noise and vibration from the chain.

The guide 105 includes a first surface 115 that faces towards, and engages with, the chain 3 when the guide 105 is mounted in the cover 107, and the cover 107 is mounted on the engine 1. The first surface 115 is elongate and runs substantially the full length of the guide 105. A second surface 117 is located opposite to the first surface 115 and faces an interior face of a side wall 119 of the engine cover when the guide 105 is located within the cover 107.

The guide 105 is preferably a moulded component that is made from a plastics material, such as an aliphatic polyamide.

The retainer formation 106 comprises a protrusion that is preferably substantially hemispherical in shape, and includes a substantially planar base 106a. The protrusion is resilient. For example, it can be made from a resilient elastomeric material, such as polyurethane; and preferably from a plasticizer-free urethane. The height of the protrusion is selected such that the protrusion can engage on the side wall 119 of the engine cover and provide a retaining function, thereby holding the guide 105 within the cover 107 during an assembly operation, for example when the cover 107 is oriented such that the engine or interior side of the cover is facing downwards.

The Shore A hardness (according to test method ASTM-D2240) of formation 106 is typically less than or equal to 85; preferably less than or equal to 80; and more preferably less than or equal to 75. The Shore A hardness is typically greater than or equal to 60; preferably greater than or equal to 65; and more preferably greater than or equal to 70.

Typically a retainer formation 106 having a height of around 1.5mm to 2.5mm is used, and preferably around 1.8mm to 2.3mm. The diameter/width of the base of the retainer formation 106 is typically in the range 6mm to 10mm; and preferably 7mm to 9mm.

The retainer formation 106 is attached to the second surface 117 by an adhesive 106b. An adhesive layer is provided on the base of the retainer formation 106. The inventors have found that the best results are achieved with a pressure sensitive adhesive 106b, and particularly an acrylic adhesive 106b. The bond between the retainer formation 106 and guide 105 is specially designed such that during normal operation of the engine 1, the retainer formation 106 detaches from the guide 105; and falls away from the guide 105 into a cavity in the engine 1. This enables the guide 105 to then perform its normal guiding function; and to have the necessary amount of play between itself and the engine cover 107. Therefore, the retainer formation 106 provides a temporary retaining function to hold the guide 105 within the engine cover 107 when the cover 107 is attached to the partially assembled engine 1. However, it is removable therefrom due to the normal engine operating conditions (heat, movement between the guide 105 and engine cover 107, for example due to the chain shaking against the guide 105, and/or other engine vibrations). Preferably, the operating temperature of the engine softens the adhesive 106b; and the relative movement between the guide 105 and engine cover 107, which is caused by the chain 3 rubbing against the guide 105, causes the retainer formation 106 to detach from the guide 105. Of course, the retainer formation 106 may detach at engine start-up, in which case the engine temperature will play a minimal role.

It has been found that an acrylic adhesive provides a relatively low peel strength and impact strength, which enables the formation 106 to be more easily disassociated from the guide 105 by the relative movement between the guide 105 and the cover 107.

The arrangement of the retainer formation 106 is such that when it falls into the engine cavity it does not interfere with the normal operation of the engine, this is by selection of at least one of the size, shape and material from which the retainer formation 106 is made. Thus the retainer formation does not block any important orifices or filters, or substantially interfere with any moving parts.

An engine assembly process to include the guide device will now be described. A partially assembled engine is located on an assembly line. The engine 1 includes a chain 3 for transferring drive between the crankshaft and camshaft(s).

The retainer formation 106 is adhered to the guide 105. This can be done at the assembly line, or as a prior step when manufacturing the guide 105. The guide 105 is inserted into the interior of the cover 107, and is mounted such that the hooks 109A, 109B engage the cover mounting formations 111A, 111B. The retainer formation 106 engages the side wall 119, the arrangement being such that the resiliency of the retainer formation 106 retains the guide 105 within the cover 107 when the cover is inverted. Thus, the assembly worker no longer has to retain the guide 105 within the cover 107 by hand during the assembly process. The assembly worker can confidently orient the cover 107 such that the interior face 113 faces downwards without the guide 105 falling out. The cover 107, and guide 105, can be more easily located on the engine in the proper location in a controlled manner since the worker can use both hands, thereby reducing the risk of damaging the FIPG and the moulded rubber gasket. The cover 107 is then secured to the engine 1, for example by bolting it to the engine 1.

Retainer formations having shapes other than substantially hemispherical - for example, substantially cylindrical, squared, tapered squared, or hexagonal - can be used as appropriate, so long as they provide the necessary retaining function to hold the guide 105 within the cover 107, and are able to disassociate from the guide 105 during normal operation of the engine.

It is envisaged that in some embodiments, more than one retainer formation 106 will be applied to the guide 105, and/or to cover 107.

The retainer formation 106 can be applied to the cover 107, as an alternative to mounting it on the guide 105. For embodiments including a plurality of retainer formations 106, each retainer formation 106 can be applied to either the guide 105; or to the cover 107.

The retainer formation 106 can be used in a manner such that it is not adhered to either of the guide 105 and engine cover 107, for example it can be used in the manner of a wedge between the guide 105 and cover 107. Thus the formation is a separate component from each of the guide and the cover; but can be used to retain the guide 105 within the cover 107 by the forces generated by forcing the formation between the components. The formation is releasable from the wedged condition by relative movement between the guide and cover, so that the formation separates from the guide and cover and falls into the engine.

## Claims

1. An engine (1) including a closed looped flexible coupling (3), an engine cover (107) and a guide body (105) for guiding movement of the closed looped flexible coupling, wherein at least one of the guide body (105) and the engine cover (107) includes at least one retainer formation (106) arranged to hold the guide body to the engine cover during an engine assembly process, wherein the or each retainer formation (106) is separable from the guide body (105) and/or engine cover (107) respectively; **characterized in that**:
the or each retainer formation (106) is arranged to separate from one of the guide body and the engine cover as a result of the engine (1) being operated.

2. An engine (1) according to claim 1, wherein the or each retainer formation (106) is a separate component; and is releasably attachable to at least one of the guide body (105) and the engine cover (107).

3. An engine (1) according to claim 2, wherein the or each retainer formation (106) is attached to the guide body (105) or to the engine cover (107) using a pressure sensitive adhesive, and preferably an acrylic adhesive.

4. An engine (1) according to any one of the preceding claims, wherein the retainer formation (106) is resilient.

5. An engine (1) according to any one of the preceding claims, wherein the retainer formation (106) includes an elastomer, and preferably a plasticizer-free elastomer.

6. An engine (1) according to any one of the preceding claims, wherein the closed looped flexible coupling (3) is a chain.

7. An engine (1) according to claim 6, wherein the chain (3) is a camshaft drive chain.

8. An assembly method for assembling an engine (1) including:
providing a partly assembled engine including a closed looped flexible coupling (3), an engine cover (107) and a guide body (105) for guiding movement of the closed looped flexible coupling (3);
providing at least one retainer formation (106) arranged to hold the guide body (105) to the engine cover (107);
mounting the guide body in the engine cover;
using the or each retainer formation (106) to retain the guide body (105) within the engine cover (107) as the engine cover is moved into a mounting position on the engine (1);
mounting the cover on the engine; and:
subsequently separating the or each retainer formation (106) from at least one of the guide body (105) and the engine cover (107).

9. A method according to claim 8, wherein separation of the or each retainer formation (106) takes place after the engine cover (107) is fully attached to the engine (1).

10. A method according to claim 8 or claim 9, including use of an adhesive to releasably attach the or each retainer formation (106) to at least one of the guide body (105) and the engine cover (107).

11. A method according to any one of claims 8 to 10, including separation of the or each retainer formation (106) from at least one of the guide body (105) and the engine cover (107) by operating the engine (1).

12. A method according to any one of claims 8 to 11, including storing the or each separated retainer formation (106) within the engine (1).

13. A method according to any one of claims 8 to 12, wherein the engine cover (107) is oriented such that the engine facing side (113) of the engine cover is oriented substantially downwards when mounting the engine cover (107) to the engine (1).

## Patentansprüche

1. Motor (1), Folgendes beinhaltend: eine geschlossene elastische Kupplung (3), eine Motorabdeckung (107) und einen Führungskörper (105) zum Führen von einer Bewegung der geschlossenen elastischen Kupplung, wobei der Führungskörper (105) und/oder die Motorabdeckung (107) wenigstens eine Halterungsausbildung (106) beinhaltet, die zum Halten des Führungskörpers an der Motorabdeckung während eines Motormontagevorgangs angeordnet ist, wobei die oder jede Halterungsausbildung (106) von dem Führungskörper (105) und/oder beziehungsweise der Motorabdeckung (107) trennbar ist;
**dadurch gekennzeichnet, dass**:
die oder jede Halterungsausbildung (106) angeordnet ist, sich als Folge, dass der Motor (1) betrieben wird, von dem Führungskörper und der Motorabdeckung zu trennen.

2. Motor (1) nach Anspruch 1, wobei die oder jede Halterungsausbildung (106) ein eigenständiger Bestandteil ist; und lösbar an den Führungskörper (105) und/oder die Motorabdeckung (107) anbringbar ist.

3. Motor (1) nach Anspruch 2, wobei die oder jede Halterungsausbildung (106) unter Verwendung eines Haftklebstoffs und vorzugsweise eines Acrylklebstoffs an dem Führungskörper (105) oder der Motorabdeckung (107) angebracht ist.

4. Motor (1) nach einem der vorhergehenden Ansprüche, wobei die Halterungsausbildung (106) federnd ist.

5. Motor (1) nach einem der vorhergehenden Ansprüche, wobei die Halterungsausbildung (106) ein Elastomer und vorzugsweise ein weichmacherfreies Elastomer beinhaltet.

6. Motor (1) nach einem der vorhergehenden Ansprüche, wobei die geschlossene elastische Kupplung (3) eine Kette ist.

7. Motor (1) nach Anspruch 6, wobei die Kette (3) eine Nockenwellenantriebskette ist.

8. Montageverfahren zum Montieren eines Motors (1), Folgendes beinhaltend:
Bereitstellen eines zum Teil montierten Motors, Folgendes beinhaltend: eine geschlossene elastische Kupplung (3), eine Motorabdeckung (107) und einen Führungskörper (105) zum Führen von Bewegung der geschlossenen elastischen Kupplung (3);
Bereitstellen wenigstens einer Halterungsausbildung (106), die angeordnet ist, den Führungskörper (105) an der Motorabdeckung (107) zu halten;
Einbauen des Führungskörpers in der Motorabdeckung;
Verwenden der oder jeder Halterungsausbildung (106), um den Führungskörper (105) in der Motorabdeckung (107) zu halten, wenn die Motorabdeckung in eine Einbauposition auf dem Motor (1) bewegt wird;
Einbauen der Abdeckung auf dem Motor; und:
darauffolgendes Trennen der oder jeder Halterungsausbildung (106) von dem Führungskörper (105) und/oder der Motorabdeckung (107).

9. Verfahren nach Anspruch 8, wobei ein Trennen der oder jeder Halterungsausbildung (106) stattfindet, nachdem die Motorabdeckung (107) vollständig an dem Motor (1) angebracht wurde.

10. Verfahren nach Anspruch 8 oder 9, das das Verwenden eines Klebstoffs beinhaltet, um die oder jede Halterungsausbildung (106) lösbar an den Führungskörper (105) und/oder die Motorabdeckung (107) anzubringen.

11. Verfahren nach einem der Ansprüche 8 bis 10, das das Trennen der oder jeder Halterungsausbildung (106) von dem Führungskörper (105) und/oder der Motorabdeckung (107) durch das Betreiben des Motors (1) beinhaltet.

12. Verfahren nach einem der Ansprüche 8 bis 11, das ein Unterbringen der oder jeder getrennten Halterungsausbildung (106) in dem Motor (1) beinhaltet.

13. Verfahren nach einem der Ansprüche 8 bis 12, wobei die Motorabdeckung (107) derart ausgerichtet ist, dass die dem Motor gegenüberliegende Seite (113) der Motorabdeckung im Wesentlichen nach unten hin ausgerichtet ist, wenn die Motorabdeckung (107) an dem Motor (1) eingebaut wird.

## Revendications

1. Moteur (1) comportant un accouplement flexible à boucle fermée (3), un couvercle de moteur (107) et un corps de guidage (105) pour guider le déplacement de l'accouplement flexible à boucle fermée, dans lequel au moins l'un du corps de guidage (105) et du couvercle de moteur (107) comporte au moins une formation de dispositif de retenue (106) agencé pour maintenir le corps de guidage sur le couvercle de moteur pendant un processus d'assemblage de moteur, dans lequel la ou chaque formation de dispositif de retenue (106) est séparable du corps de guidage (105) et/ou du couvercle de moteur (107) respectivement ;
**caractérisé en ce que** :
la ou chaque formation de dispositif de retenue (106) est agencée pour être séparée de l'un du corps de guidage et du couvercle de moteur en raison de la mise en fonctionnement du moteur (1).

2. Moteur (1) selon la revendication 1, dans lequel la ou chaque formation de dispositif de retenue (106) est un composant séparé ; et peut être fixée de façon libérable à au moins l'un du corps de guidage (105) et du couvercle de moteur (107).

3. Moteur (1) selon la revendication 2, dans lequel la ou chaque formation de dispositif de retenue (106) est fixée au corps de guidage (105) ou au couvercle de moteur (107) à l'aide d'un adhésif sensible à la pression, et de préférence d'un adhésif acrylique.

4. Moteur (1) selon l'une quelconque des revendications précédentes, dans lequel la formation de dispositif de retenue (106) est élastique.

5. Moteur (1) selon l'une quelconque des revendications précédentes, dans lequel la formation de dispositif de retenue (106) comporte un élastomère, et de préférence un élastomère sans plastifiant.

6. Moteur (1) selon l'une quelconque des revendications précédentes, dans lequel l'accouplement flexible à boucle fermée (3) est une chaîne.

7. Moteur (1) selon la revendication 6 dans lequel la chaîne (3) est une chaîne d'entraînement d'arbre à cames.

8. Procédé d'assemblage pour assembler un moteur (1) comportant :
la fourniture d'un moteur partiellement assemblé comportant un accouplement flexible à boucle fermée (3), un couvercle de moteur (107) et un corps de guidage (105) pour guider le déplacement de l'accouplement flexible à boucle fermée (3) ;
la fourniture d'au moins une formation de dispositif de retenue (106) agencée pour maintenir le corps de guidage (105) sur le couvercle de moteur (107) ;
le montage du corps de guidage dans le couvercle du moteur ;
l'utilisation de la ou de chaque formation de dispositif de retenue (106) pour retenir le corps de guidage (105) à l'intérieur du couvercle de moteur (107) lorsque le couvercle de moteur est déplacé dans une position de montage sur le moteur (1) ;
le montage du couvercle sur le moteur ; et
la séparation ultérieure de la ou de chaque formation de dispositif de retenue (106) d'au moins l'un du corps de guidage (105) et du couvercle de moteur (107).

9. Procédé selon la revendication 8, dans lequel la séparation de la ou de chaque formation de dispositif de retenue (106) a lieu après la fixation complète du couvercle de moteur (107) sur le moteur (1).

10. Procédé selon la revendication 8 ou la revendication 9, comportant l'utilisation d'un adhésif pour fixer de façon libérable la ou chaque formation de dispositif de retenue (106) à au moins l'un du corps de guidage (105) et du couvercle de moteur (107).

11. Procédé selon l'une quelconque des revendications 8 à 10, comportant la séparation de la ou de chaque formation de dispositif de retenue (106) d'au moins l'un du corps de guidage (105) et du couvercle de moteur (107) par la mise en fonctionnement du moteur (1).

12. Procédé selon l'une quelconque des revendications 8 à 11, comportant le stockage de la ou de chaque formation de dispositif de retenue (106) séparée à l'intérieur du moteur (1).

13. Procédé selon l'une quelconque des revendications 8 à 12, dans lequel le couvercle de moteur (107) est orienté de sorte que le côté en regard du moteur (113) du couvercle de moteur est orienté sensiblement vers le bas lors du montage du couvercle du moteur (107) sur le moteur (1).
